(19) Europäisches Patentamt
European Patent Office
Office européen des brevets

(11) **EP 3 179 669 B1**

(12) **EUROPEAN PATENT SPECIFICATION**

(45) Date of publication and mention
of the grant of the patent:
**19.09.2018 Bulletin 2018/38**

(51) Int Cl.:
***H04L 9/00*** (2006.01)     ***H04L 9/08*** (2006.01)

(21) Application number: **16203128.0**

(22) Date of filing: **09.12.2016**

(54) **DRM KEY TREE PROVISIONING**

DRM-SCHLÜSSELBAUMBEREITSTELLUNG

APPROVISIONNEMENT D'ARBORESCENCE DE CLÉS DRM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.12.2015 EP 15199314**

(43) Date of publication of application:
**14.06.2017 Bulletin 2017/24**

(73) Proprietors:
• **Koninklijke KPN N.V.
3072 AP Rotterdam (NL)**
• **Nederlandse Organisatie voor toegepast-
natuurwetenschappelijk onderzoek TNO
2595 DA 's-Gravenhage (NL)**

(72) Inventors:
• **BANGMA, Menno
2493 BD The Hague (NL)**
• **VEUGEN, Peter
2272 WN Voorburg (NL)**

(74) Representative: **Wuyts, Koenraad Maria
Koninklijke KPN N.V.
Intellectual Property Group
P.O. Box 25110
3001 HC Rotterdam (NL)**

(56) References cited:

• **"Chapter 12: Key Establishment Protocols ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 489 - 541 , 1 October 1996 (1996-10-01), XP001525012, ISBN: 978-0-8493-8523-0 Retrieved from the Internet: URL:http://www.cacr.math.uwaterloo.ca/hac/**
• **VANESA DAZA ET AL: "A Distributed and Computationally Secure Key Distribution Scheme", INTERNATIONAL ASSOCIATION FOR CRYPTOLOGIC RESEARCH,, vol. 20030411:085507, 1 June 2002 (2002-06-01), pages 1-16, XP061000299,**
• **QIN-LONG HUANG ET AL: "Secure and privacy-preserving DRM scheme using homomorphic encryption in cloud computing", JOURNAL OF CHINA UNIVERSITIES OF POSTS AND TELECOMMUNICATIONS, vol. 20, no. 6, 1 December 2013 (2013-12-01), pages 88-95, XP055271061, CN ISSN: 1005-8885, DOI: 10.1016/S1005-8885(13)60113-2**
• **ANONYMOUS: "Marlin Architecture Overview", 20071231 , 31 December 2007 (2007-12-31), pages 1-27, XP002625843, Retrieved from the Internet: URL:http://www.marlin-community.com/public /MarlinArchitectureOverview.pdf [retrieved on 2011-03-03]**
• **Intertrust: "Marlin Broadband Architecture Overview", , 5 November 2007 (2007-11-05), XP055022449, Retrieved from the Internet: URL:http://www.marlin-community.com/public /MarlinBroadbandArchitectureOverview.pdf [retrieved on 2012-03-20]**

## Description

The invention relates to a method of communicating a value originating at a first node, via a second node arranged to generate a key tree distribution scheme, to a third node, and further relates to a content distribution system wherein the first node is a content provider, the second node is a content distributer and the third node is a user in a user group created by the content distributor. The invention further relates to a node arranged to generate keys from values distributed via a key tree distribution scheme and to a node arranged to generate and encrypt a number using a homomorphic encryption system, and further relates to a computer program product arranged to perform the method.

## Background of the invention

The secure delivery of digital content, for example films, videos, broadcasts, multi-casts, unicasts and music content, from a content provider to a user is a known problem in entertainment management. Content providers create or acquire content which is deliverable for a fee to interested viewers and listeners, via a content distribution system, and a problem is how to ensure distribution to only those individuals who are correctly subscribed. Various technologies, described under the umbrella term Digital Rights Management (DRM), have been developed to ensure content is delivered only to the user, or users, entitled to view or access the content.

Traditionally the content provider creating the content was also the content deliverer explicitly delivering the content to the user and who might therefore have a formal commercial relationship with the user. In a simple example of this, a broadcast network that created TV programs would broadcast them directly, using their own network technology, to a group of users who all subscribed directly to the network to view the programs. However, the development of new digital technologies and increasing interoperability in networking have allowed other business models to arise and it is now possible for content from a range of content creators and content providers to be provided or delivered to a user via separate delivery networks.

Different users may make a commercial undertaking, that is pay for service from specific content deliverers, or for different levels of service from a specific content deliverer, or may make a commercial undertaking for content created or provided by specific providers. In a typical situation, and in a similar situation to a Content Delivery Network (CDN), three parties may exist, the Content Provider (CP) who provides the content, a Content Distributor (CD) that distributes the content via a network, and a number of users coupled to the network who are able to receive the content. Where a commercial relationship exists between a user and either a content provider or a content deliverer (the Content Distributor), the content is typically encrypted to ensure that only the paid user can access or view the content. This necessitates the delivery of keys to the user so that the user can decrypt the delivered content.

A content provider, or CP, providing content to users, encrypts this content with a service key and may broadcast the encrypted content to all users through a content distribution system. The content distribution system is typically a network. Only correctly subscribed users are allowed to access the content, so in a correctly working system they will be the only ones allowed to obtain the service key (for example in the case of symmetric encryption). Also, subscribers to content may vary over time, with users changing or varying their subscription according to their needs, so in each time period different pools or groups of users will be entitled to access different streams of content. Somehow, users should be able to obtain the correct service keys (used for decryption) for all the varying content for which they are subscribed for that particular period.

However, while the CP provides content to a CD, the CD is usually the only entity that knows the users and their subscriptions. Therefore the CD will normally perform key management. Delivery of digital content, via a network, to a group of users is typically undertaken using a key tree, which ensures that a group of users, sometimes termed a 'non-excluded group' can access a particular content while another group, the 'excluded group', cannot.

A typical key tree arrangement is depicted using a tree of nodes, or leaves, in which each leaf represents a user. According to the methods of key tree distribution, for example Marlin Starfish, version 1.2, final, Marlin Developer Community, August 22, 2006, a DRM platform supporting MPEG-DASH, keys are updated in each period via the tree structure. Access to, commercial use of and specifications of Marlin Starfish can be found at The Marlin Trust Management Organization (https://www.marlin-trust.com/). The service key for the period is encrypted with, typically, a new common key and broadcast to all users by the CD. Only the users that are able to derive the common key will be able to get the service key and decrypt the content.

An initialisation of keys occurs in which users are divided into hierarchical groups according to a tree structure in which each leaf represents a user and keys are assigned to nodes in the tree, each user obtains an initial set of keys, and a periodic computation of a Common Key (CK) occurs. The periodic computation of the Common Key allows for an assumption that in each period different users are authorized to obtain the content and at the start of a new period, the DRM system will broadcast which users are authorized to see the content. The Common Key is computed in such a way that only authorized users are able to construct it, using their initial set of keys. Because of the way keys are constructed, it's not necessary to send all keys to each user because from one node key, all leaf keys can be computed for those leaves that descend from that particular node. Each user receives the keys of other users in his group, but not his or her own key. Content is broadcast to all users after it is encrypted with the Service Key (SK). The Service Key changes frequently and is also broadcast to all users after it has been encrypted with the Common Key and only authorized users are able to decrypt the content, because only they can construct the CK and consequently obtain the SK which allows them to decrypt the content.

The main problem with such a method of key distribution, for example by Marlin Starfish, is that the CD transmits keys to the users along with the content, and therefore learns the Service Key

which is used to decrypt the content. The Service Key is chosen by the CP and must be provided to the user so that he can decrypt the content, but is not needed by the CD other than for the purposes of delivering it to the authorised users. Nevertheless, in many modern content distribution systems, it is the CD that knows the identities of the group of users and can calculate who is and who is not an authorised user for any particular content and therefore it cannot manage and maintain the group of users as a commercial entity without also knowing which users requires which keys. Therefore the CD becomes aware of the Service Key.

While the CD may be a trusted entity it nevertheless becomes a potential source from which any keys used in the key distribution scheme may be leaked or stolen. The CD typically employs numerous employees and not all these employees may be aware of the importance of maintaining confidentiality of keys, and some may even wish to leak or steal keys deliberately for personal gain. Therefore the CD may be seen as a weak link in the route between CP and user. The Service Key can be leaked or stolen from the CD and this may cause or allow distribution of the delivered content to non-subscribed users. This denies rightful income to the CP, for authorised access to their content, and also results in rightful users paying a commercial price for content while other, non-authorised users, get access to the same content for free or for a reduced price via an unofficial intermediary.

It is therefore a problem to ensure that content is efficiently delivered from a CP to users whilst preventing key leakage through an intermediary system, such as a CD, to unauthorized parties..

Handbook of Applied Cryptography; [CRC PRESS SERIES ON DISCRETE MATHEMATICES AND ITS APPLICATIONS], 19961001 CRC Press, BOCA RATON, FL, US - ISBN 978-0-8493-8523-0 ; ISBN 0-8493-8523, Chapter 12, considers considers key establishment protocols and related cryptographic techniques which provide shared secrets between two or more parties, typically for subsequent use as symmetric keys for a variety of cryptographic purposes including encryption, message authentication, and entity authentication. The main focus is two-party key establishment, with the aid of a trusted third party in some cases.

Vanesa Daza et al, "A Distributed and Computationally Secure Key Distribution Scheme"; International Association for Cryptologic Research, 20020601, Vol:20030411:085507,Page(s):1 - 16 , is a publication about a Distributed and Computationally Secure Key Distribution Scheme.

## Summary

The invention, as defined in the claims, allows a user at a third node to derive a service key chosen by a content provider at a first node, without a content deliverer at a second node deriving or finding out the service key. The content deliverer at the second node generates a key distribution scheme by which the service key may be efficiently distributed.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a nonexhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions and acts specified in the diagram.

A solution to the problem is provided by a method of communicating a value originating at a first node, via a second node arranged to generate a key tree distribution scheme, to a third node, and wherein the third node represents the i$^{th}$ member, $u_i$, of a group U intended to receive keys distributed via the key tree distribution scheme, and wherein the value is usable in the key tree distribution scheme.

The method comprises generating and encrypting a number g at the first node using a homomorphic encryption system, and transmitting to the second node the encrypted g. The homomorphic encryption system has a public key associated with it and this public key is being used for encrypting the number g. The method further comprises, at the third node, generating a number $r_i$ and encrypting $r_i$ using the public key of the homomorphic encryption system, which public key is received or derived from information received at the third node, and transmitting to the second node the encrypted $r_i$. The method also comprises, at the second node, choosing an integer pi for each user i in U; repeating a mathematical operation pi - 1 times, in the encrypted domain, on the encrypted g to obtain a result hi; and performing the mathematical operation, based on said result hi, in the encrypted domain on the encrypted $r_i$, and using part of the public key of the homomorphic encryption system, which part of the public key is received or derived at the second node, to produce a first result, and transmitting the first result to the first node. The method also comprises, at the first node, decrypting the first result, using the homomorphic encryption system, to produce a second result, and transmitting the second result to the second node, preferably for transmission to the third node. The method also comprises, at the third node, receiving the second result from the second node, and computing, using ri, on the second result, in the plain domain, the inverse of the mathematical operation performed by the second node, to produce the value.

In doing so the third node is able to generate the value from the second result, which originates at the first node. In order to do this the third node uses the number $r_i$ which was generated at the third node. The second result is transmitted to the second node by the first node, but the second node is unable to derive the value from the second result because the second node does not have access to the number $r_i$. The third node therefore gets access to a value which is tied to information which the first node has, but which can be kept secret from the second node.

Another way of thinking about the invention is that it is a method to generate a value at a third node, under the direction of the first node, because the first node may choose the homomorphic encryption system and thereby controls generation of the second value by decrypting the first result using that homomorphic encryption system, the first result being derivable from $r_i$ which is generated at the third node.

The value ultimately generated at the third node can be a key, a part of a key, can be used as a key or be a value which can be used to generate a key, for use in a key tree distribution system.

Therefore another way of thinking about the operation is that the first node and the third node share a secret, in the second result and the value, to which the second node does not have access, but which the second node can pass from one to the other of the first and third nodes.

This solves the problem of how to get data, preferably a key, such as a user key, from the first node to the third node without the second node becoming aware or being able to derive the data (e.g. the key), because the value derived at the third node using $r_i$ can be either the key itself, or be a value from which the key can be further derived at the third node using further information at the third node or of which the third node is aware. The first node also knows the value because it knows the second result. Therefore both the first and third nodes either know or can derive the value, but the second node cannot, even though both the first and third nodes communicate with each other through the second node.

The mathematical operation performed by the second node is dependent upon the homomorphic encryption system chosen by the first node. Any homomorphic encryption system may be chosen.

In a further embodiment the type or form of the homomorphic encryption system chosen by the first node is communicated to the second node, which can be performed using any known method of communicating information. For example the information may be communicated via a wireless or telecommunications network, via the internet, via email, via a link etc. It may also be that the second node informs the first node of its capabilities, on the basis of which the first node makes a decision which homomorphic encryption system it applies. Alternatively the first and second node are simply preconfigured in such a way that the homomorphic encryption system used by the first node is compatible with the mathematical operations supported by the second node. In such case communication of the type of form of the homomorphic system chosen may not be needed. The first node may typically be a server or computer or telecommunications base station adapted to be coupled, or adapted for coupling, to a communications network or to the internet. The second node may typically also be a server or computer, router, or gateway or telecommunications base station adapted to be coupled to a communications network. The third node may typically be a router or gateway device or home networking device or smartphone, computer or server adapted to be coupled to a communications network. All of these nodes are configured with the ordinary means for transmitting and receiving information over communications networks. These may be fixed networks or wireless networks (e.g. LTE, Wifi) or a combination of networks.

In a particular embodiment the second node may instead choose the homomorphic encryption system and communicate this to the first node.

In using the method the third node encrypts the generated number $r_i$ using the public key of the homomorphic encryption system. In an embodiment the public key is transmitted to the third node using any known means, including transmission over a network, transmission of a link, or hyperlink, to the key which link or hyperlink is operable or accessible over a network. The public key is therefore received at the third node, or derived from information received at the third node, via any known means.

Since the third node performs the inverse of the mathematical operation performed by the second node, the third node is preferably made aware of at least either the operation performed by the second node or the chosen homomorphic encryption system. In an alternative, all nodes are preconfigured to operate in a compatible manner.

The third node performs an operation on plain texts, which reverses, in other words breaks up, the mathematical operation on, or combining, the cipher texts performed by the second node. Again, communication of the information to the third node can be performed using any known method of communicating information and does not form part of the invention.

As such the steps of the method are split between three physical entities, or nodes.

In a specific embodiment the first node may be a server or computer coupled to a first network, the second node may be a server or network node in the first network, and the third node may be a home or domestic node, router, set top box, coupled to the first network and in a further embodiment also coupled to a second network. The second network may be a local area network (LAN), a domestic network or other arrangement comprising a small number of devices networked to each other. In a further embodiment the third node may be situated in the first network and be accessible by a node in a second network. Thus the invention may be used to transfer information usable in a key tree distribution scheme from a first network to a second network.

In an embodiment of the method the second node uses the encrypted g received from the first node to generate a plurality of user codes for the key tree distribution scheme, and then transmits the user codes to the third node. The third node uses the produced value and the user codes to create the keys of the key tree distribution scheme.

The keys of the key tree distribution scheme may be created when the user codes are received, or later when the provided content (e.g. via a broadcast or unicast or otherwise) is to be consumed in plain format (e.g. viewed, listened to), or at any time in between.

In an embodiment of the method the first node transmits the public key of the chosen homomorphic encryption system to the third node via the second node. Therefore the first node transmits the public key of the homomorphic encryption system, or a link thereto, to the second node for use in performing the mathematical operation, based on the encrypted g, in the encrypted domain on the encrypted $r_i$, to produce the first result, and further the second node transmits the public key of the homomorphic encryption system, or the link thereto, to the third node for use in encrypting $r_i$.

In a particular embodiment the third node my acquire the full public keys in parts or sections and in a further embodiment may acquire the different parts via different routes. For example, a public key may comprise parts d and N, say, and the third node may receive d via one transmission and N via a separate transmission. Alternatively d or N may be received at the third node via a transmission and the other may be accessed by the third node via a link communicated to the third node.

In an embodiment of the method the homomorphic encryption system is RSA and the first node generates a value N for generating the public key, wherein N has prime factors p and q, g is co-prime with N, and the value g is characterised by $0 < g < N$. The first node also generates a number d for generating the public key, wherein d is co-prime with $\varphi(N)$ and further wherein $0 < d < N$. Also the first node encrypts g using $h = g^d \bmod N$ and transmits N and d to the second node, for generating the public key of the homomorphic encryption system. The second node transmits N and d to the third node and the third node generates $r_i$ wherein $r_i$ has no common divisor with N.

In an embodiment $r_i$ is a random number and can be any number. In an embodiment $r_i$ may be generated by a random number generator or by any technique for generating random numbers. In a further embodiment $r_i$ is a random number in the sense that it is a number not already known by the second node. In this sense $r_i$ is not constrained to be generated randomly, but may be generated using random generation methods as a way of arriving at a number which the second node does not already know. Typically 'random' can be taken to mean that $r_i$ is not one of the numbers already known to the first and second nodes, and in particular to the second node, and so the nodes do not have an obvious way of guessing or generating the number $r_i$.

In an embodiment $r_i$ is based on N, or $r_i$ is generated in dependence on N, and in a further embodiment $r_i$ is a function of N.

In an embodiment the prime factors, p and q, or N, are large prime factors. In an embodiment p and q are chosen to be sufficiently large that the third node could generate $r_i$ as a random number. In an embodiment p and q are sufficiently large that a standard computer could not factorise N. In an embodiment p and q are sufficiently large that the method is computationally safe for 5 years as defined by NIST standardisation body. In a further embodiment p and q are of the order of 1000 binary bits each. In an embodiment p and q are sufficiently large that the method is computationally safe for 10 years as defined by NIST standardisation body. In an embodiment the standard computer is coupled to the network of which the second node is a part.

In an alternative embodiment the homomorphic encryption system is Pallier and again, the first node generates two primes in order to generate a key. In an alternative embodiment the homomorphic encryption system is ElGamal and the first node generates one prime and in a further embodiment generates one large prime.

In an embodiment the value produced at the third node is a user key. In an alternative embodiment the value is a value or number that can be used to generate a key. In this way the third node may use the method to generate a user key directly or to generate a value that may be used to generate a further user key or user keys for decryption of content.

In an further embodiment in which RSA is the homomorphic encryption system, the third node encrypts the random number $r_i$ and transmits it to the second node by performing the method of calculating $r_i^d \bmod N$, and transmitting $r_i^d \bmod N$ from the third node to the second node.

In an further embodiment in which RSA is the homomorphic encryption system the second node computes $(h_i * r_i^d) \bmod N$ using a value $h_i$ computed by the second node and transmits $(h_i * r_i^d) \bmod N$ to the first node.

In an further embodiment, the second node performs the method of generating a set of prime numbers $\{p_i\}$, one for each entity in the group of entities U, calculating $h_i = (h^{p_i} \bmod N)$ and transmitting a set of values $P_i$ to the third node as user codes, where $P_i = \{p_1, p_2, p_3, .... p_{i-1}, P_{i+1}, ..., p_N\}$. This allows the second node to distribute the information needed for the third node to generate the keys in the key tree distribution scheme set up by the second node.

In an further embodiment in which RSA is the homomorphic encryption system, the method further comprises the first node receiving $(h_i * r_i^d) \bmod N$ from the second node, computing the integer $1/d$, where $0 < 1/d < N$, and is the multiplicative inverse of d modulo $\varphi(N)$, and decrypting the value by calculating $(h_i * r_i^d)^{1/d} \bmod N$, and transmitting the value by transmitting a value equivalent to $(h_i * r_i^d)^{1/d} \bmod N$ to the second node for transmission to the third node.

In an further embodiment in which RSA is the homomorphic encryption system, the second node transmits the value equivalent to $(h_i * r_i^d)^{1/d} \bmod N$ to the third node and the third node multiplies the value equivalent to $(h_i * r_i^d)^{1/d} \bmod N$ by the multiplicative inverse of random number $r_i$ to calculate the value $(g^{p_i}) \bmod N$.

The invention also relates to a content distribution system comprising a first node, a second node and a third node and arranged to communicate a value originating at the first node to the third node, via the second node and wherein the second node is arranged to generate a key tree distribution scheme, and further wherein the third node represents the ith member, $u_i$, of a group U intended to receive keys distributed via the key tree distribution scheme, and wherein the value is a value which can be used in the key tree distribution scheme. The first node is a content provider, the second node is a content distributer, and the third node is a user in a user group created by the content distributor. The first node is arranged to generate and encrypt a number g using a homomorphic encryption system and transmit to the second node the encrypted g. The homomorphic encryption system has a public key associated with it and this public key is being used for encrypting the number g.

The third node is arranged to generate a number $r_i$, encrypt $r_i$ using the public key of the homomorphic encryption system, which public key is received or derived from information received at the third node, and transmit to the second node the encrypted $r_i$. The second node is arranged to choose an integer pi for each user i in U; repeat a mathematical operation pi - 1 times, in the encrypted domain, on the encrypted g to obtain a result hi; and perform the mathematical operation, based on said result hi, in the encrypted domain on the encrypted $r_i$, and to produce a first result using part of the public key of the homomorphic encryption system, which part of the public key is received or derived at the second node. The second node is arranged to transmit the first result to the first node. The first node is arranged to decrypt the first result, using the homomorphic encryption system, to produce a second result, and transmit the second result to the second node for transmission to the third node. The third node is arranged to receive the second result from the second node, and compute, using $r_i$, on the second result, in the plain domain, the inverse of the mathematical operation performed by the second node, to produce the value.

Typically the first, second and third nodes are in communication with each other via a telecommunications network.

In an embodiment the value is a key. In a further embodiment the value is a user key. In an alternative embodiment the value is a value or number that can be used to generate a key or user key. In this way the third node may use the method to generate a user key directly or to generate a value that may be used to generate a further user key or user keys for decryption of content.

The invention also relates to a computer program product arranged to perform the method of the invention.

In a further embodiment the invention may be considered as follows. Let (E, D) be a homomorphic (and asymmetric) crypto system with encryption algorithm E and decryption algorithm D. Let $\otimes$ and $\oplus$ be two arbitrary operations, where $\otimes$ works on cipher texts, and $\oplus$ on plain texts, which together define the homomorphic property of the crypto system by:

$$D(E(x) \otimes E(y)) = x \oplus y$$

In the example of RSA $\otimes$ and $\oplus$ are both multiplication modulo an RSA composite number. In ElGamal, they are both multiplication modulo a large prime. In Paillier, the $\otimes$ is multiplication modulo N2, and $\oplus$ is addition modulo N.

Let $\otimes k$ denote the function that, similar to exponentiation, repeats the operation $\otimes$ k-1 times, so $\otimes 2(x) = x \otimes x$, $\otimes 3(x) = x \otimes x \otimes x$, etc. Similarly define the function $\oplus k$. Then the following steps are a generalization of the key initialization protocol.

Firstly, the CP generates the keys of the homomorphic crypto system. It also chooses a suitable plain text number g. The CP encrypts g and sends h = E(g) to the CD, together with the public key.

Secondly, the CD chooses an integer pi for each user i $\in$ U, and computes hi = $\otimes$pi(h).

Thirdly, the CD sends the public key to user i, together with the integers pj for all j $\neq$ i.

Fourthly, user i generates a random number ri, encrypts it using the public key, and sends the number E(ri) back to the CD.

Fifthly, the CD computes hi $\otimes$ E(ri) for each user i $\in$ U and sends it to the CP.

Sixthly, the CP, who knows the decryption key, CP computes D(hi $\otimes$ E(ri)), obtaining D(hi) $\oplus$ D(E(ri)) = D($\otimes$pi(E(g))) $\oplus$ ri = $\oplus$pi(g) $\oplus$ ri.

Seventhly, the CP sends $\oplus$pi(g) $\oplus$ ri to the CD, who forwards it to user i.

Eighthly, user i computes the inverse (-ri) of his random number ri, computes $\oplus$pi(g) $\oplus$ ri $\oplus$ (-ri), and obtains his user key $\oplus$pi(g).

The common key CK can be similarly computed, given set T of privileged users by the following method.

Firstly, the CD computes PT = $\Pi$j $\in$ T pj and $\otimes$PT(h).

Secondly, the CD sends $\otimes$PT(h) to the CP.

Thirdly, the CP decrypts it and obtains D($\otimes$PT(E(g))) = $\oplus$PT(g), which equals the CK.

A privileged user i is able to compute CK as CK = $\oplus$Pi($\oplus$pi(g)), where Pi = PT / pi.

The generalized system is secure, as long as it is infeasible to compute g from $\oplus$pi(g) and pi, without knowing the decryption key.

In a further, specific, embodiment, a solution to the problem is provided by a method of delivering a value from a first node which forms a part of a first entity, via a second node which forms a part of a second entity arranged to generate a key distribution scheme, to a third node which forms part of a third entity, and wherein the third entity is the $i^{th}$ member, $u_i$, of a group of entities U intended to receive keys distributed via the key distribution scheme, and where the method comprises encrypting the value at the first node using a number N generated by the first entity and a random number $r_i$ generated by the third entity, and where $r_i$ and N do not have a common divisor, N has large prime factors p and q, and where the second entity is in receipt of N but is not in receipt of p and q. The method further comprises transmitting the encrypted value from the first node through the second node to the third node.

Because in this embodiment the first entity generates a number N with prime divisors p and q, and because the value to be transmitted is encrypted at the first entity with both N and a random number $r_i$ generated by the third entity, and because the second entity does not know p or q, the second entity therefore cannot decrypt the value. The random number $r_i$ and the number N are used to transport the value past the second entity. In other words they 'blind' the value to the second entity and the first entity and the third entity speak to each other through the use of a random

number $r_i$ and a further number N, but the second entity is unable to listen in on their conversation because the second entity does not know p and q, which are large prime factors of N.

The number N may be generated in the first node or elsewhere in the first entity.

The number $r_i$ may be generated in the third node or elsewhere in the third entity.

The first entity may be a content provider and the first node may be a network element, for example a server, a computer connected to a network, or other networked device connected, via a network, to the second node which may be any network element in a network capable of distributing content.

In a typical embodiment the second entity is a content distributer and the second node will be a network element in a network maintained by the second entity. The second node may be a server, a switch, network router, a DSLAM, or any other network element through which electronic signals can flow.

In an embodiment the third entity is a user, typically a subscribed user, and the third node is a user device, for example a computer, a laptop, a set top box. In an embodiment the third node may also be a node in a network accessible by the user, for example a storage area in the cloud.

The value may be any value but in a specific embodiment may be a key, a value which can be used to generate a key, a Common Key, a tree key or a Service Key.

Therefore the method has the advantage of blinding of keys towards a second entity, which can be a CD. By blinding the keys towards the CD, the CD will not be able to derive the Common Key and thus will remain oblivious of the Service Key and therefore unauthorised distribution or redistribution of the content by the CD will be avoided.

The use of a user generated random number also protects the user keys to be transmitted because in the method the CD can now give each user an initial set of user keys without learning the keys itself and without relying on the traditional method of the CP generating a secret key along and then sharing it with each user through the CD. Instead, by having the user generate a random number, an alternative way of transporting user keys is created which allows knowledge of the key to bypass the CD. This generation of $r_i$ is required only once during initialisation.

The random number $r_i$ may be transmitted to the first entity in any number of ways.

In an embodiment, and prior to transmission of the value from the first node, the third entity performs the method of encrypting the generated random number $r_i$ and transmitting it to the second node for transmission to the first node.

In alternative embodiments $r_i$ may be transmitted using an alternative route, for example, through an alternative network. In a specific embodiment the second entity may be an internet network and the random number $r_i$ may be transmitted from the third entity, the user, to the first entity, a content provider, via a mobile network, using for example a mobile phone.

In an embodiment the third entity encrypts the random number $r_i$ and transmits it to the second node by calculating $r_i^d \bmod N$ using a value d provided by the first entity and transmitting $r_i^d \bmod N$ from the third node to the second node.

The value d provided by the first entity may be communicated to the third entity in an manner possible. For example it may be transmitted through the second entity, and via the second node, encrypted using a key previously agreed and mutually known by both the first and third entity. Alternatively, the value d may be transmitted from the first entity to the third entity using an alternative network. For example, if the second entity is an internet network the value d may be transmitted from the first entity to the third entity via a mobile network.

In an embodiment the second entity further performs the method of computing $(h_i * r_i^d) \bmod N$ using a value hi computed by the second entity and transmitting $(h_i * r_i^d) \bmod N$ to the first node. This provides a method by which the random number $r_i$ can be transmitted to the first entity. Uses this method provides the advantage that the random number $r_i$ can be conveniently transmitted though the known network of the second entity but without the second entity becoming aware of it. The second entity remains unaware of it because it does not know p and q.

In an embodiment the first entity, prior to transmission of the encrypted value from the first node, also performs the method of generating a number g, wherein g is co-prime with N and further wherein $0 < g < N$, and a number d, wherein d is co-prime with $\varphi(N)$ and further wherein $0 < d < N$, and h, wherein $h = g^d \bmod N$, and further transmits N and d to the second node for transmission on to the third node so that the third entity is in receipt of N and d.

This allows the third node to be in receipt of N. This further provides the advantage that the third node can choose a random number $r_i$ which does not have a common divisor with N. This method also allows the third node to be in receipt of d. This further allows the third node to calculate $r_i^d \bmod N$ for transmission to the second node.

However, in alternative embodiments the third node can be in receipt of either N or d, or both N and d via other methods. Either or both can be transmitted from the first entity to the third entity using a key previously agreed by the first and third entity, and unknown to the second entity, or either or both can be transmitted via an alternative network and therefore bypass the second entity completely.

Allowing the third node knowledge of d allows d to be used as a fixed public exponent for the transfer of information. This enables the CD to construct a key distribution tree and compute all keys preserving the required structure that enables suitable computation of the CK.

In an embodiment the second node performs the method of receiving the numbers h and d from the first node, generating a set of prime numbers $\{p_i\}$, one for each entity in the group of entities U, calculating $h_i = (h^{pi} \bmod N)$, and transmitting numbers d, N, and a set of values $P_i$ to the third node, where $P_i = \{p_1, p_2, p_3, .... p_{i-1}, p_{i+1}, ... , p_N\}$. This allows the second node to construct a key distribution scheme.

In an embodiment the first entity, prior to transmission of the encrypted value from the first node, also performs the method of transmitting h to the second node, so that the second node is in receipt of the number h.

In an embodiment the first entity performs the method of receiving $(h_i * r_i^d) \bmod N$ from the second node, computing the integer 1/d, where $0 < 1/d < N$, and is the multiplicative inverse of d modulo $\varphi(N)$; and decrypting the value by calculating $(h_i * r_i^d)^{1/d} \bmod N$, and transmitting the value by transmitting a value equivalent to $(h_i * r_i^d)^{1/d} \bmod N$ to the second node for transmission to the third node.

In an embodiment the second node transmits the value equivalent to $(h_i * r_i^d)^{1/d} \bmod N$ to the third node.

In an embodiment the third node performs the method equivalent to multiplying the value equivalent to $(h_i * r_i^d)^{1/d} \bmod N$ by the multiplicative inverse of random number $r_i$ to calculate the value $(g^{pi}) \bmod N$.

The value $(g^{pi}) \bmod N$ is thereby transmitted for the first entity to the third entity, without becoming known to, or knowable by, the second entity. The value $(g^{pi}) \bmod N$ can be used as a key, a tree key, a Common Key, a Service Key, or can be used to calculate or derive or unlock or access any of a key, a tree key, a Common Key or a Service Key.

The invention also relates to a content distribution system using any of the methods as described and where the first entity is a content provider, the second entity is a content distributer, and the third entity is a user in a user group created by the content distributor. This allows the methods described to be used to distribute keys and in particular a key tree distribution system. Use of the method allows secure communication of all initial user key trees by a content deliverer (CD), secure communication of a Common Key to all users by a CD, encryption of a Service Key using a Common Key by a content provider (CP), and secure generation of a Common Key by a CD that can only be reconstructed by authorized users.

Therefore in a further embodiment of the content distribution system the value is a key, and in a further embodiment still the key is a symmetrical key.

In an embodiment the key can be used by the third entity to decrypt a common key for viewing content distributed by the second node. In particular, the content distributed by the second node may be encrypted content.

In an embodiment the common key, CK, is defined by $CK = g^{PT} \bmod N$, the first entity uses the CK to encrypt the content, the second entity computes $P_T = \Pi_{j \in T}\, p_j$ and $h^{PT} \bmod N$, the second entity transmits $h^{PT} \bmod N$ to the first entity, the first entity computes the $d^{th}$ root and obtains $(h^{PT})^{1/d} \bmod N = g^{PT} \bmod N$ which equals the CK. This provides an embodiment by which the method can be utilised in a working key tree distribution environment.

In an embodiment the method of is performed for each user $u_i$ in a group of users U.

The invention is suitable for use in a content distribution scheme. The invention allows a key distribution system in which a CD, which knows a group of subscribed users, is able to deliver a Common Key to the subscribed users through a DRM tree without learning the Service Key that is created by the CP. This allows for the secure delivery of encrypted content and reduces the number of entities that become aware of the Service Key. This reduces the risk that the Service Key is leaked or otherwise becomes known to unauthorised users.

## Figures

These and other features of the invention are shown in the following figures.

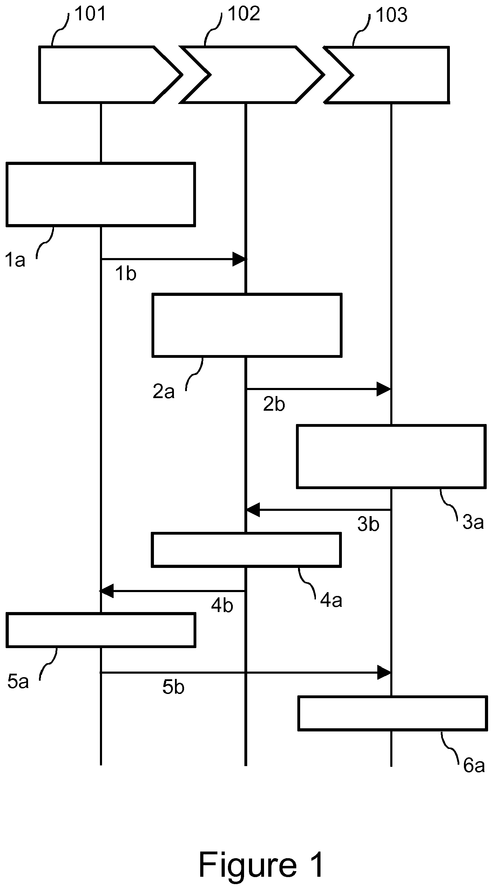

Figure 1 shows an embodiment of the invention including first, second and third nodes and their interaction with each other through an embodiment of the method.

## Detailed Description

To clarify terminology we explain the technical measures in more detail. In the context of this description we define a user key generally as equal to $g^p \bmod N$ for some random number g and some random prime p. In the current method, g is chosen by the CP and p is chosen by the CD. The prime differs for each user but the number g is constant.

Blinding by an exponent is possible since modular root extraction is hard if the prime factors of a number are not known. Modular root extraction means that given random y, where $0 < y < N$, and fixed $d > 0$, it is infeasible to compute the, usually unique, value x that satisfies $y = x^d \bmod N$, without knowing the factorization of N. In the context of this description, N is chosen by the CP and in doing so he knows the factorisation. However, he does not share or communicate the factorisation to the CD therefore the CD does not know the factorisation of N.

To avoid the CD learning a user key, we let it be oblivious of g. To that end the CP chooses a fixed $d > 0$ and computes $h = g^d \bmod N$. The CD is allowed to know h but will be unable to compute g. The CD will however be able to choose different primes p and raise h to these powers.

Only CP will be able to compute $g^p \bmod N$ from $h^p \bmod N$ because it knows the factorization of N and thus can perform modular root extraction. Similarly, the CD will at some point be able to compute $CK^d \bmod N$, but will be unable to compute its $d^{th}$ root which is the Common Key CK.

Using these methods embodiments of secure transportation of initial user keys by user generated random numbers is explained in greater detail in the following discussion.

To apply the method we distinguish three parties namely the content provider CP, the content distributer CD and the user u. U denotes the set of all users, or more precisely, the set of users for the group in question since all users are subdivided into groups by the CD. The step of encrypting the service key can be performed by any known method. The CP will learn CK after the second step and can use his preferred encryption method for encrypting the SK. Table 1 describes a method for initializing keys.

Table 1: Embodiment for the Initialisation of keys

| Step | Details |
|---|---|
| 1 | The CP chooses two large primes and multiplies them to obtain N. It also chooses a (small) integer d and a number g of high order. The CP sends $h = g^d$ mod N to the CD together with the number N and the integer d. |
| 2 | The CD chooses a (small) prime $p_i$ for each user $i \in U$, and computes $h_i = h^{p_i}$ mod N. |
| 3 | The CD sends integers d and N to user i, together with the primes $p_j$ for all $j \neq i$. |
| 4 | User i generates a random number $r_i \in Z_N^*$ and sends the number $r_i^d$ mod N back to the CD. |
| 5 | The CD computes $(h_i * r_i^d)$ mod N for each user $i \in U$ and sends it to the CP. |
| 6 | The CP, who knows the factorization of N, can compute[1] 1/d, the multiplicative inverse modulo $\varphi$(N) which is the exponent required for computing the $d^{th}$ root modulo N. Using 1/d, the CP computes the $d^{th}$ root of the numbers $(h_i * r_i^d)$ mod N, obtaining $(h_i * r_i^d)^{1/d} = (g^{p_i} * r_i)$ mod N.<br>1 Formally, this can be done only when d is coprime with $\varphi$(N), so some care should be taken while generating d. |
| 7 | The CP sends $(g^{p_i} * r_i)$ mod N to the CD, who forwards it to user i. |
| 8 | User i divides $(g^{p_i} * r_i)$ mod N by his random number $r_i$ and obtains his user key $g^{p_i}$ mod N. |

Using the protocol described in Table 1, each user will obtain its proper keys without the CD (but also the CP) ever learning the initial user keys $g^{p_i}$ mod N. The primes $p_i$ depend on the tree structure and are only known to the CD.

Table 2 describes a more detailed embodiment of the method.

Table 2: Detailed Embodiment of computational steps

| Step | Details |
|---|---|
| 1 | The CP takes integer g, which is number between 0 and N (coprime with N), raises it to the power d, and reduces the result modulo N. Reducing modulo N means computing the remainder after dividing $g^d$ by N. The result $h = (g^d$ mod N) is an integer between 0 and N.<br>The integer d is actually a public RSA exponent, which can be used for encrypting numbers. Only the CP is able to decrypt, because it knows the factors of N. So in fact h is an encryption of g: h = E(g). The order of integer g is defined as the lowest positive integer n such that $g^n$ mod N = 1. Euler's theorem states that $g^{\varphi(N)}$ mod N = 1 for any g coprime with N, so we know that the order of g is at most $\varphi$(N). The function $\varphi$ is known as Euler's totient function. The integer g should be chosen such that its order is high, to avoid that h, or any of the later computed $h_i$ equals one. |
| 2 | For each user i, the CD computes $h_i = (h^{p_i}$ mod N), by raising the integer h to the power $p_i$, and reducing the result modulo N. |
| 3 | Let P be the set of all user primes $\{p_i \mid i \in U\}$. The CD sends to each user i the set P\{$p_i$}, so all primes except the prime of user i, and the integers d and N. |
| 4 | Each user i generates a random number $r_i$, which is an integer between 0 and N (and coprime with N). User i raises its random number to the power d, and reduces the result modulo N. The result $E(r_i) = (r_i^d$ mod N) is an integer between 0 and N, can be seen as the encryption of $r_i$, and is sent to the CD. |

(continued)

| Step | Details |
|---|---|
| 5 | For each i, the CD multiplies $E(r_i)$ with $h_i$, and reduces the result modulo N: $\rho_i = (E(r_i) * h_i)$ mod N. The CD sends all $\rho_i$ to the CP. |
| 6 | The CP decrypts all $\rho_i$. To be able to decrypt, the CD first computes the integer $1/d$, which is a number between 0 and N, and is mathematically defined as the multiplicative inverse of d modulo $\varphi(N)$. The algorithm for computing $1/d$ is known as the Extended Euclidean algorithm. Second, the CD raises $\rho_i$ to the power $1/d$, reduces the result modulo N, and obtains $D(\rho_i) = (\rho_i^{1/d})$ mod N. |
| 7 | The CP sends all integers $D(\rho_i)$ to the CD, who forwards them to the corresponding users. Each user i eventually obtains $D(\rho_i)$. Mathematically can be shown that $D(\rho_i) = D((E(r_i) * h_i)$ mod N$) = (r_i * D(h_i))$ mod N $= (r_i * D(h^{pi}$ mod N$))$ mod N $= (r_i * D(E(g)^{pi}$ mod N$))$ mod N $= (r_i * g^{pi})$ mod N. |
| 8 | Each user i divides $D(\rho_i)$ by his random number number $r_i$, and obtains his user key $(g^{pi})$ mod N. The division of integer $D(\rho_i)$ by integer $r_i$ is computed by multiplying the integer $D(\rho_i)$ with the multiplicative inverse of $r_i$, and reducing the result modulo N: $(g^{pi})$ mod N $= (D(\rho_i) * r_i^{-1})$ mod N. The multiplicative inverse $r_i^{-1}$ of $r_i$ (modulo N) can again be computed with the Extended Euclidean algorithm. |

This sequence of events described in Table 2 is shown in Figure 1, which shows content provider CP 101, content distributor CD 102 and user $u_i$ 103.

CP 101 generates parameters N, d, g and computes $h = g^d$ mod N in step 1a. In step 1b the CP 101 sends d, N and h to the CD 102.

In step 2a the CD 103 generates $p_i$ and computes $h_i = h^{pi}$ mod N.

In step 2b the CD 103 sends d, N, and $p_j$ for all $j \neq i$ to user 103.

In step 3a user 103 generates a random number $r_i$ where $r_i$ is an element of $Z_N{}^*$.

User 103 then calculates $r_i^d$ mod N and transmits it in step 3b to CD 102.

The CD 102 then computes $(h_i * r_i^d)$ mod N in step 4a and in step 4b transmits this to the CP 101.

In step 5a the CP 101 computes $(h_i * r_i^d)^{1/d}$ mod N $= (g^{pi} * r_i)$ mod N and in step 5b transmits the value represented by $(g^{pi} * r_i)$ mod N through the CD 102 to the user 103. This value is the value which the CD 102 cannot decrypt. The user 103 receives this value and uses it, step 6a, to compute the value $g^{pi}$ mod N, which can then be used as a key or to decrypt a key, and in particular can be used to decrypt or otherwise access a Common Key or a Service Key for the decryption of content, provided by CP 101 and delivered by CD 102.

At some point, the CD will announce a new period by broadcasting a set T of privileged users. Only the privileged users, who have the proper keys, will be able to derive the common key $CK = g^{PT}$ mod N, where $P_T$ denotes $\Pi_{j \in T} p_j$.

In an embodiment the CD computes $P_T = \Pi_{j \in T} p_j$ and $h^{PT}$ mod N. The CD then sends $h^{PT}$ mod N to the CP. The CD then computes the $d^{th}$ root and obtains $(h^{PT})^{1/d}$ mod N $= g^{PT}$ mod N, which equals the CK. This allows the CP to obtain the proper CK for encrypting the SK.

The keys can also be computed by RSA roots. In that case there is a large composite number N consisting of two large primes. The secret value is a number g that has high order in $Z_N{}^*$. High order means that $g^n \neq 1$ mod N for small values of n. Given the factorization of N, computing such a g is easy.

For each user $i \in U$ a prime, typically a small prime, $p_i$ is generated. User i obtains $g^{pi}$ mod N and all primes $p_j$ for $j \neq i$. Suppose $T \subset U$ is the set of privileged users, then the common key will be $g^{PT}$ mod N, where $P_T$ denotes $\Pi_{j \in T} p_j$. Because it's infeasible to compute roots modulo a composite number without knowing the factorization, i.e. to compute g from $g^{pi}$ mod N, only privileged users will be able to compute the common key.

The "zero message broadcast encryption" solution of the prior art is applied straightforwardly to our three party CP - CD - User setting for the construction of tree keys within the key tree distribution system. The CP encrypts the content with the SK, the CD computes the tree, its keys, and the CK, and the user obtains the encrypted content.

The above description provides a specific embodiment by which a key or keys may be distributed by a middle man from an end point to an end point without the middleman becoming aware of them. However, alternative embodiments exist.

In a particular embodiment, when the CP knows the user keys, the CD should not multiply $h_i$ and $r_i^d$ mod N, but send them separately to the CP. The CP then multiplies them instead of the CD.

If the CP is not allowed to know the CK, for instance for privacy reasons so he doesn't learn which users subscribed to which content, the following modify is possible. In step 2a* the CD generates a random number r and sends $r^d * CK^d$ mod N to the CP. Then the CP takes the $d^{th}$ root and encrypts the SK by multiplying it with $r * CK$ mod N. The CD divides the result by r and broadcasts $SK * CD$ mod N. Only users that know CD will be able to obtain the SK.

The Marlin system, as known, uses a slightly different key structure. Each user key equals $h^n(S_i)$ for some randomly generated seeds $S_i$ and some positive integer n. The function h is a hash function. The invention as described can also be used for Marlin like systems by choosing $S_i = g^{pi}$ mod N and hash function $h(x) = x^\alpha$ mod N for some integer $\alpha > 1$ coprime with d. The user keys can be delivered to each user using the same protocol described above for the "Initialisation of keys". Once a CK has to be generated, which is named Key Encryption Key in Marlin, the CD will generate $CK^d$ mod N and, identical to our invention, send it to the CP. In Marlin, a Key Encryption Key has to be generated for each group interval.

Instead of using RSA, any multiplicative homomorphic encryption scheme E, for example ElGamal, could be used. Instead of computing $h = g^d$ mod N, the CP will compute $E(g)$. And the inverse operation $(h^{PT})^{1/d}$ mod N will be replaced by $D(E(g)^{PT})$ mod N which equals $CK = g^{PT}$ mod N.

The user generated random numbers can also be used to upload a secret key k from the CP to all users, such that k will be unknown to CD. The protocol is described below. Consequently, the CD could use any DRM system (even the Zero Message Broadcast Encryption with hash functions) consisting of a key distribution system and CK construction scheme to generate keys. The CD sends the CK to the CP, and the CP now doesn't use $E_{CK}(SK)$ but $E_k(E_{CK}(SK))$ for broadcasting the encrypted SK to the legitimate users.

To upload a secret key k to all users, the following embodiment as described in table 3 can be used.

Table 3: Embodiment for the Uploading of a Secret Key

| Step | Details |
|---|---|
| 1 | CP generates a key pair for any public key encryption scheme and sends the public key to the CD. |
| 2 | The CD broadcasts the CP's public key to the users. |
| 3 | Each user generates a random number, encrypts it with CP's public key and sends it to the CD. |
| 4 | The CD sends the encrypted random numbers to the CP. |
| 5 | The CP decrypts the random numbers and uses them as a key for encrypting k. Here any symmetrical encryption system could be used. |
| 6 | The CP sends the encrypted k, via the CD, to all users. |
| 7 | Each users decrypts it by using his own random number as a key, and obtains k. |

The invention provides an efficient method by which a value, or a key, can be generated by a first entity and transported to a third entity, via a second entity and without the second entity learning or becoming aware of the value or key. The invention finds application in Digital Rights Management (DRM) and the distribution of encrypted content via a network and allows, for example, a content provider who wants to outsource distribution of content to a content distributor rather than distribute it itself to users. The content provider does not need to know the users. Nevertheless the method provides an efficient manner in which a content provider can allow a group of users to access their content without the content distributer learning the decryption key or keys.

Alternatively, the invention may also be used for the distribution of content to a social network. In this embodiment the content comprises some kind of label that indicates the type of content, for example, butterflies, or short comic movies. The social network owner or manager knows which of its users have similar interests, but doesn't want to reveal this to the content distributor. The content distributor wants to get his content to interested users only, but is not aware of them. Within the social network, encrypted content is broadcasted to all users, but only 'kindred spirits', i.e. those users that the distributer knows will appreciate the content will be able to enjoy the content.

**Claims**

1. Method of communicating a value originating at a first node (101), via a second node (102) arranged to generate a key tree distribution scheme, to a third node (103), and wherein the third node represents the $i^{th}$ member, $u_i$, of a group U intended to receive keys distributed via the key tree distribution scheme, and wherein the value is usable in the key tree distribution scheme, the method comprising:

   at the first node:

- generating and encrypting a number g using a homomorphic encryption system, the homomorphic encryption system having associated with it a public key, the public key being used for encrypting the number g;
- transmitting to the second node:

    - the encrypted g;

at the third node:

- generating a number $r_i$,
- encrypting $r_i$ using the public key of the homomorphic encryption system, which public key is received or derived from information received at the third node, and
- transmitting to the second node:

    - the encrypted $r_i$;

at the second node:

- choosing an integer pi for each user i in U;
- repeating a mathematical operation pi - 1 times, in the encrypted domain, on the encrypted g to obtain a result hi;
- performing the mathematical operation, based on said result hi, in the encrypted domain,

on the encrypted $r_i$, using part of the public key of the homomorphic encryption system, which part of the public key is received or derived at the second node, to produce a first result;

- transmitting the first result to the first node;

at the first node:

- decrypting the first result, using the homomorphic encryption system, to produce a second result, and
- transmitting the second result to the second node for transmission to the third node;

at the third node:

- receiving the second result from the second node, and
- computing, using $r_i$, on the second result, in the plain domain, the inverse of the mathematical operation performed by the second node, to produce the value.

2. The method according to claim 1, the method further comprising,
at the first node:

- transmitting the public key of the homomorphic encryption system, or a link thereto, to the second node for use in performing the mathematical operation, based on the encrypted g, in the encrypted domain, on the encrypted $r_i$, to produce the first result; and
at the second node:

- transmitting the public key of the homomorphic encryption system, or the link thereto, to the third node for use in encrypting $r_i$.

3. The method according to either of claim 1 or 2, wherein:

- the homomorphic encryption system is RSA; and
at the first node:

- generating a value N for use in the public key, wherein

    - N has prime factors p and q;
    - g is co-prime with N; and

- the value g is **characterised by** $0 < g < N$;
- generating a number d for use in the public key, wherein d is co-prime with $\varphi(N)$ and further wherein $0 < d < N$; and
- encrypting g using $h = g^d \bmod N$;
- transmitting N and d to the second node as the public key of the homomorphic encryption system; and

at the second node:

- transmitting N and d to the third node;

at the third node:

- generating $r_i$ wherein:

- $r_i$ has no common divisor with N.

4. The method of any previous claim wherein $r_i$ is a random number.

5. The method of claim 4 wherein the third node encrypts the random number $r_i$ and transmits it to the second node by:
at the third node:

- calculating $r_i^d \bmod N$,
- transmitting $r_i^d \bmod N$ from the third node to the second node.

6. The method of claim 5 further including:
at the second node:

- computing $(h_i * r_i^d) \bmod N$ using a value $h_i$ computed by the second node; and
- transmitting $(h_i * r_i^d) \bmod N$ to the first node.

7. The method of claim 3 wherein the second node performs the method of:

- generating a set of prime numbers $\{p_i\}$, one for each entity in the group of entities U;
- calculating $h_i = (h^{p_i} \bmod N)$; and
- transmitting a set of values $P_i$ to the third node as user codes, where $P_i = \{p_1, p_2, p_3, .... P_{i-1}, P_{i+1}, ..., p_N\}$.
- using the produced value and the user codes to create the keys of the key tree distribution scheme.

8. The method according to claim 6 further including:
at the first node:

- receiving $(h_i * r_i^d) \bmod N$ from the second node;
- computing the integer $1/d$, where $0 < 1/d < N$, and is the multiplicative inverse of d modulo $\varphi(N)$; and decrypting the value by:
- calculating $(h_i * r_i^d)^{1/d} \bmod N$; and transmitting the value by:
- transmitting a value equivalent to $(h_i * r_i^d)^{1/d} \bmod N$ to the second node for transmission to the third node.

9. The method according to claim 8 wherein
at the second node:

- transmitting the value equivalent to $(h_i * r_i^d)^{1/d} \bmod N$ to the third node;

at the third node:

- multiplying the value equivalent to $(h_i * r_i^d)^{1/d} \bmod N$ by the multiplicative inverse of random number $r_i$ to calculate the value $(g^{p_i}) \bmod N$.

10. A content distribution system comprising:

- a first node (101);
- a second node (102); and
- a third node (103); and arranged to communicate a value originating at the first node to the third node, via the second node and wherein the second node is arranged to generate a key tree distribution scheme, and further wherein the third node represents the $i^{th}$ member, $u_i$, of a group U intended to receive keys distributed via the key tree distribution scheme, and wherein the value is a value which can be used in the key tree distribution scheme, and further wherein:
- the first node is a content provider;
- the second node is a content distributer, and
- the third node is a user in a user group created by the content distributor and wherein:

the first node is arranged to:

- generate and encrypt a number g using a homomorphic encryption system, the homomorphic encryption system having associated with it a public key, the public key being used for encrypting the number g;
- transmit to the second node:

- the encrypted g;

the third node is arranged to:

- generate a number $r_i$,
- encrypt $r_i$ using the public key of the homomorphic encryption system, which public key is received or derived from information received at the third node, and
- transmit to the second node:

- the encrypted $r_i$;

the second node is arranged to:

- choose an integer pi for each user i in U;
- repeat a mathematical operation pi - 1 times, in the encrypted domain, on the encrypted g to obtain a result hi;
- perform the mathematical operation, based on said result hi, in the encrypted domain on the encrypted $r_i$, and using part of the public key of the homomorphic encryption system, which part of the public key is received or derived at the second node, to produce a first result;

- transmit the first result to the first node;

the first node is arranged to:

- decrypt the first result, using the homomorphic encryption system, to produce a second result, and
- transmit the second result to the second node for transmission to the third node;

the third node is arranged to:

- receive the second result from the second node, and
- compute, using $r_i$, on the second result, in the plain domain, the inverse of the mathematical operation performed by the second node, to produce the value.

**11.** A content distribution system according to claim 10 wherein the value is a key.

**12.** A computer program product arranged to perform the method according to claims 1-9.

**Patentansprüche**

1. Verfahren zum Kommunizieren eines Werts, der von einem ersten Knoten (101) ausgeht, über einen zweiten Knoten (102), der ausgelegt ist zum Erzeugen eines Schlüsselbaumverteilungsschemas, zu einem dritten Knoten (103) und wobei der dritte Knoten das i-te Glied, $u_i$, einer Gruppe U repräsentiert, die zum Empfangen von Schlüsseln, die über das Schlüsselbaumverteilungsschema verteilt werden, beabsichtigt ist, und wobei der Wert im Schlüsselbaumverteilungsschema verwendet werden kann, wobei das Verfahren Folgendes umfasst:

   am ersten Knoten:

   - Erzeugen und Verschlüsseln einer Zahl g unter Verwendung eines homomorphen Verschlüsselungssystems, wobei das homomorphe Verschlüsselungssystem einen mit diesem assoziierten öffentlichen Schlüssel aufweist, wobei der öffentliche Schlüssel zum Verschlüsseln der Zahl g verwendet wird;
   - Übertragen zum zweiten Knoten:

      - der verschlüsselten g;

   am dritten Knoten:

   - Erzeugen einer Zahl $r_i$,
   - Verschlüsseln von $r_i$ unter Verwendung des öffentlichen Schlüssels des homomorphen Verschlüsselungssystems, wobei der öffentliche Schlüssel am dritten Knoten empfangen oder an diesem aus empfangenen Informationen hergeleitet wird, und
   - Übertragen zum zweiten Knoten:

      - der verschlüsselten $r_i$;

   am zweiten Knoten:

   - Auswählen einer ganzen Zahl pi für jeden Benutzer i in U;
   - Wiederholen einer mathematischen Operation pi - 1 Male, in der verschlüsselten Domäne, an der verschlüsselten g, um ein Ergebnis hi zu erhalten;
   - Durchführen der mathematischen Operation, basierend auf dem Ergebnis hi, in der verschlüsselten Domäne, an der verschlüsselten $r_i$ unter Verwendung eines Teils des öffentlichen Schlüssels des homomorphen Verschlüsselungssystems, wobei der Teil des öffentlichen Schlüssels am zweiten Knoten empfangen oder hergeleitet wird, um ein erstes Ergebnis zu erzeugen;
   - Übertragen des ersten Ergebnisses zum ersten Knoten;

   am ersten Knoten:

   - Entschlüsseln des ersten Ergebnisses unter Verwendung des homomorphen Verschlüsselungssystems, um ein zweites Ergebnis zu erzeugen, und
   - Übertragen des zweiten Ergebnisses zum zweiten Knoten zur Übertragung zum dritten Knoten;

   am dritten Knoten:

   - Empfangen des zweiten Ergebnisses vom zweiten Knoten, und
   - Berechnen unter Verwendung von $r_i$ am zweiten Ergebnis, in der einfachen Domäne, der Umkehrung der mathematischen Operation, die durch den zweiten Knoten durchgeführt wird, um den Wert zu erzeugen.

2. Verfahren nach Anspruch 1, wobei das Verfahren ferner Folgendes umfasst:

   am ersten Knoten:

   - Übertragen des öffentlichen Schlüssels des homomorphen Verschlüsselungssystems oder eine Verknüpfung zu diesem zum zweiten Knoten zur Verwendung bei der Durchführung der mathematischen Operation, basierend auf der verschlüsselten g, in der verschlüsselten Domäne, an der verschlüsselten $r_i$, um das erste Ergebnis zu erzeugen; und

am zweiten Knoten:

- Übertragen des öffentlichen Schlüssels des homomorphen Verschlüsselungssystem oder der Verknüpfung zu diesem zum dritten Knoten zur Verwendung bei der Verschlüsselung von $r_i$.

3. Verfahren nach Anspruch 1 oder 2, wobei:

das homomorphe Verschlüsselungssystem RSA ist; und
am ersten Knoten:

- Erzeugen eines Werts N zur Verwendung im öffentlichen Schlüssel, wobei

- N Primfaktoren p und q aufweist;
- g teilerfremd mit N ist; und
- der Wert g durch $0 < g < N$ gekennzeichnet ist;

- Erzeugen einer Zahl d zur Verwendung im öffentlichen Schlüssel, wobei d teilerfremd mit $\varphi(N)$ ist und ferner wobei $0 < d < N$; und
- Verschlüsseln von g unter Verwendung von $h = g^d \bmod N$;
- Übertragen von N und d zum zweiten Knoten als den öffentlichen Schlüssel des homomorphen Verschlüsselungssystems; und

am zweiten Knoten:

- Übertragen von N und d zum dritten Knoten;

am dritten Knoten:

- Erzeugen von $r_i$, wobei:

- $r_i$ keinen gemeinsamen Teiler mit N aufweist.

4. Verfahren nach einem der vorangegangenen Ansprüche, wobei $r_i$ eine Zufallszahl ist.

5. Verfahren nach Anspruch 4, wobei der dritte Knoten die Zufallszahl $r_i$ verschlüsselt und sie zum zweiten Knoten durch Folgendes überträgt:
am dritten Knoten:

- Berechnen von $r_i^d \bmod N$,
- Übertragen von $r_i^d \bmod N$ vom dritten Knoten zum zweiten Knoten.

6. Verfahren nach Anspruch 5, ferner beinhaltend:
am zweiten Knoten:

- Berechnen von $(h_i * r_i^d) \bmod N$ unter Verwendung eines Werts $h_i$, der durch den zweiten Knoten berechnet wird; und
- Übertragen von $(h_i * r_i^d) \bmod N$ zum ersten Knoten.

7. Verfahren nach Anspruch 3, wobei der zweite Knoten das folgende Verfahren durchführt:

- Erzeugen einer Menge von Primzahlen $\{p_i\}$, eine für jede Entität in der Gruppe von Entitäten U;
- Berechnen von $h_i = (h^{p_i} \bmod N)$; und
- Übertragen einer Menge von Werten $P_i$ zum dritten Knoten als Benutzercodes, wobei $P_i = \{p_1, p_2, p_3, ..., p_{i-1}, p_{i+1}, ..., p_N\}$,
- Verwenden des erzeugten Werts und der Benutzercodes, um die Schlüssel des Schlüsselbaumverteilungsschemas zu erzeugen.

8. Verfahren nach Anspruch 6, ferner beinhaltend:

am ersten Knoten:

- Empfangen von $(h_i * r_i^d)$ mod N vom zweiten Knoten;
- Berechnen der ganzen Zahl 1/d, wobei $0 < 1/d < N$, und sie die multiplikative Umkehrung von d Modulo $\varphi(N)$ ist; und

Entschlüsseln des Werts durch:

- Berechnen von $(h_i * r_i^d)^{1/d}$ mod N; und Übertragen des Werts durch:

- Übertragen eines Werts äquivalent zu $(h_i * r_i^d)^{1/d}$ mod N zum zweiten Knoten zur Übertragung zum dritten Knoten.

9. Verfahren nach Anspruch 8, wobei:

am zweiten Knoten:

- Übertragen des Werts äquivalent zu $(h_i * r_i^d)^{1/d}$ mod N zum dritten Knoten;

am dritten Knoten:

- Multiplizieren des Werts äquivalent zu $(h_i * r_i^d)^{1/d}$ mod N mit der multiplikativen Umkehrung der Zufallszahl $r_i$, um den Wert $(g^{p_i})$ mod N zu berechnen.

10. Inhaltsverteilungssystem, umfassend:

- einen ersten Knoten (101);
- einen zweiten Knoten (102); und
- einen dritten Knoten (103); und ausgelegt zum Kommunizieren eines Werts, der vom ersten Knoten stammt, über den zweiten Knoten zum dritten Knoten und wobei der zweite Knoten ausgelegt ist zum Erzeugen eines Schlüsselbaumverteilungsschemas, und ferner wobei der dritte Knoten das i-te Glied, $u_i$, einer Gruppe U repräsentiert, die zum Empfangen von Schlüsseln, die über das Schlüsselbaumverteilungsschema verteilt werden, beabsichtigt ist, und wobei der Wert ein Wert ist, der in dem Schlüsselbaumverteilungsschema verwendet werden kann, und ferner wobei:
- der erste Knoten ein Inhaltsanbieter ist;
- der zweite Knoten ein Inhaltsverteiler ist, und
- der dritte Knoten ein Benutzer in einer Benutzergruppe ist, die durch den Inhaltsverteiler erzeugt wird, und wobei:

der erste Knoten ausgelegt ist zum:

- Erzeugen und Verschlüsseln einer Zahl g unter Verwendung eines homomorphen Verschlüsselungssystems, wobei das homomorphe Verschlüsselungssystem einen mit diesem assoziierten öffentlichen Schlüssel aufweist, wobei der öffentliche Schlüssel zum Verschlüsseln der Zahl g verwendet wird;
- Übertragen zum zweiten Knoten:

- der verschlüsselten g;

der dritte Knoten ausgelegt ist zum:

- Erzeugen einer Zahl $r_i$,
- Verschlüsseln von $r_i$ unter Verwendung des öffentlichen Schlüssels des homomorphen Verschlüsselungssystems, wobei der öffentliche Schlüssel am dritten Knoten empfangen oder an diesem aus empfangenen Informationen hergeleitet wird, und
- Übertragen zum zweiten Knoten:

- der verschlüsselten $r_i$;

der zweite Knoten ausgelegt ist zum:

- Auswählen einer ganzen Zahl pi für jeden Benutzer i in U;
- Wiederholen einer mathematischen Operation pi - 1 Male, in der verschlüsselten Domäne, an der verschlüsselten g, um ein Ergebnis hi zu erhalten;
- Durchführen der mathematischen Operation, basierend auf dem Ergebnis hi, in der verschlüsselten Domäne, an der verschlüsselten $r_i$ und unter Verwendung eines Teils des öffentlichen Schlüssels des homomorphen Verschlüsselungssystems, wobei der Teil des öffentlichen Schlüssels am zweiten Knoten empfangen oder hergeleitet wird, um ein erstes Ergebnis zu erzeugen;
- Übertragen des ersten Ergebnisses zum ersten Knoten;

der erste Knoten ausgelegt ist zum:

- Entschlüsseln des ersten Ergebnisses unter Verwendung des homomorphen Verschlüsselungssystems, um ein zweites Ergebnis zu erzeugen, und
- Übertragen des zweiten Ergebnisses zum zweiten Knoten zur Übertragung zum dritten Knoten;

der dritte Knoten ausgelegt ist zum:

- Empfangen des zweiten Ergebnisses vom zweiten Knoten, und
- Berechnen, unter Verwendung von $r_i$, am zweiten Ergebnis, in der einfachen Domäne, der Umkehrung der mathematischen Operation, die durch den zweiten Knoten durchgeführt wird, um den Wert zu erzeugen.

11. Inhaltsverteilungssystem nach Anspruch 10, wobei der Wert ein Schlüssel ist.

12. Computerprogrammprodukt, das ausgelegt ist zum Durchführen des Verfahrens nach den Ansprüchen 1-9.


**Revendications**

1. Procédé pour communiquer une valeur provenant d'un premier noeud (101), via un second noeud (102) conçu pour générer un schéma de distribution d'arbre de clés, à un troisième noeud (103), et dans lequel le troisième noeud représente le $i^{\text{ème}}$ élément, $u_i$, d'un groupe U prévu pour recevoir des clés distribuées par le schéma de distribution d'arbre de clés, et dans lequel la valeur est utilisable dans le schéma de distribution d'arbre de clés, le procédé consistant à :

au premier noeud ;

- générer et crypter un nombre g en utilisant un système de cryptage homomorphique, le système de cryptage homomorphique ayant une clé publique qui lui est associée, la clé publique étant utilisée pour crypter le nombre g ;
- transmettre au second noeud :

- le g crypté ;

au troisième noeud :

- générer un nombre $r_i$,
- crypter $r_i$ en utilisant la clé publique du système de cryptage homomorphique, laquelle clé publique est reçue ou dérivée d'informations reçues au troisième noeud ; et
- transmettre au second noeud :

- le $r_i$ crypté ;

au second noeud :

- choisir un entier pi pour chaque utilisateur i dans U ;

- répéter une opération mathématique pi-1 fois dans le domaine crypté sur le g crypté pour obtenir un résultat hi ;
- effectuer l'opération mathématique, en fonction dudit résultat hi, dans le domaine crypté, sur le $r_i$ crypté en utilisant une partie de la clé publique du système de cryptage homomorphique, laquelle partie de la clé publique est reçue ou dérivée au second noeud, pour produire un premier résultat ;
- transmettre le premier résultat au premier noeud ;

au premier noeud :

- décrypter le premier résultat en utilisant le système de cryptage homomorphique pour produire un second résultat ; et
- transmettre le second résultat au second noeud pour la transmission au troisième noeud ;

au troisième noeud :

- recevoir le second résultat du second noeud, et
- calculer, en utilisant $r_i$ sur le second résultat dans le domaine normal, l'inverse de l'opération mathématique effectuée par le second noeud pour produire la valeur.

**2.** Procédé selon la revendication 1, consistant en outre :

au premier noeud :

- transmettre la clé publique du système de cryptage homomorphique, ou un lien vers celle-ci, au second noeud pour l'utiliser lors de l'opération mathématique, en fonction du g crypté, dans le domaine crypté, sur le $r_i$ crypté pour produire le premier résultat ; et

au second noeud :

- transmettre la clé publique du système de cryptage homomorphique, ou un lien vers celle-ci, au troisième noeud pour l'utiliser dans le cryptage de $r_i$.

**3.** Procédé selon la revendication 1 ou 2, dans lequel :

- le système de cryptage homomorphique est RSA ; et

au premier noeud :

- générer une valeur N à utiliser dans la clé publique, dans lequel :

- N a des facteurs premiers p et q ;
- g est co-premier avec N ; et

- la valeur g est **caractérisée par** 0 < g < N ;
- générer un nombre d à utiliser dans la clé publique, où d est co-premier avec $\varphi(N)$ et en outre dans lequel 0 < d < N ; et
- crypter g en utilisant $h = g^d \bmod N$ ;
- transmettre N et d au second noeud comme clé publique du système de cryptage homomorphique ; et

au second noeud :

- transmettre N et d au troisième noeud ;

au troisième noeud :

- générer $r_i$ dans lequel :

- $r_i$ n'a aucun diviseur commun avec N.

**4.** Procédé selon l'une quelconque des revendications précédentes, dans lequel $r_i$ est un nombre aléatoire.

**5.** Procédé selon la revendication 4, dans lequel le troisième noeud crypte le nombre aléatoire $r_i$ et le transmet au second noeud en :

au troisième noeud :

- calculant $r_i^d$ mod N,
- transmettant $r_i^d$ mod N du troisième noeud au second noeud.

**6.** Procédé selon la revendication 5, consistant en outre à :

au second noeud :

- calculer $(h_i * r_i^d)$ mod N en utilisant une valeur $h_i$ calculée par le second noeud ; et
- transmettre $(h_i * r_i^d)$ mod N au premier noeud.

**7.** Procédé selon la revendication 3, dans lequel le second noeud effectue le procédé consistant à :

- générer un ensemble de nombres premiers $\{p_i\}$, un pour chaque entité dans le groupe d'entités U ;
- calculer $h_i = (h^{p_i}$ mod N) ; et
- transmettre un ensemble de valeurs $P_i$ au troisième noeud en qualité de codes d'utilisateur, où $P_i = \{p_1, p_2, p_3, ..., p_{i-1}, p_{i+1}, ..., p_N\}$,
- utiliser la valeur produite et les codes d'utilisateur pour créer les clés du schéma de distribution d'arbre de clés.

**8.** Procédé selon la revendication 6, consistant en outre à :

au premier noeud :

- recevoir $(h_i * r_i^d)$ mod N du second noeud ;
- calculer l'entier 1/d, où 0 < 1/d < N et est l'inverse multiplicatif de d modulo $\varphi(N)$ ; et

décrypter la valeur en :

- calculant $(h_i * r_i^d)^{1/d}$ mod N ; et transmettre la valeur en :
- transmettant une valeur équivalente à $(h_i * r_i^d)^{1/d}$ mod N au second noeud pour la transmission au troisième noeud.

**9.** Procédé selon la revendication 8, dans lequel au second noeud :

- transmettre la valeur équivalente à $(h_i * r_i^d)^{1/d}$ mod N au troisième noeud ;

au troisième noeud :

- multiplier la valeur équivalente à $(h_i * r_i^d)^{1/d}$ mod N par l'inverse multiplicatif du nombre aléatoire $r_i$ pour calculer la valeur $(g^{p_i})$ mod N.

**10.** Système de distribution de contenu comprenant :

- un premier noeud (101) ;
- un second noeud (102) ; et
- un troisième noeud (103) ; et conçu pour communiquer une valeur provenant du premier noeud au troisième noeud via le second noeud, et dans lequel le second noeud est conçu pour générer un schéma de distribution d'arbre de clés, et en outre dans lequel le troisième noeud représente le $i^{ème}$ élément, $u_i$, d'un groupe U prévu pour recevoir des clés distribuées par le schéma de distribution d'arbre de clés, et dans lequel la valeur est une valeur qui peut être utilisée dans le schéma de distribution d'arbre de clés, et dans en outre lequel :
- le premier noeud est un fournisseur de contenu ;
- le second noeud est un distributeur de contenu ; et
- le troisième noeud est un utilisateur dans un groupe d'utilisateur créé par le distributeur de contenu et dans lequel :

le premier noeud est conçu pour :

- générer et crypter un nombre g en utilisant un système de cryptage homomorphique, le système de cryptage homomorphique ayant une clé publique qui lui est associée, la clé publique étant utilisée pour crypter le nombre g ;
- transmettre au second noeud :

- le g crypté ;

le troisième noeud est conçu pour :

- générer un nombre $r_i$,
- crypter $r_i$ en utilisant la clé publique du système de cryptage homomorphique, laquelle clé publique est reçue ou dérivée d'informations reçues au troisième noeud ; et
- transmettre au second noeud :

- le $r_i$ crypté ;

le second noeud est conçu pour :

- choisir un entier pi pour chaque utilisateur i dans U ;
- répéter une opération mathématique pi-1 fois dans le domaine crypté sur le g crypté pour obtenir un résultat hi ;
- effectuer l'opération mathématique, en fonction dudit résultat hi, dans le domaine crypté, sur le $r_i$ crypté et en utilisant une partie de la clé publique du système de cryptage homomorphique, laquelle partie de la clé publique est reçue ou dérivée au second noeud, pour produire un premier résultat ;
- transmettre le premier résultat au premier noeud ;

le premier noeud est conçu par :

- décrypter le premier résultat en utilisant le système de cryptage homomorphique pour produire un second résultat ; et
- transmettre le second résultat au second noeud pour la transmission au troisième noeud ;

le troisième noeud est conçu pour :

- recevoir le second résultat du second noeud, et
- calculer, en utilisant $r_i$ sur le second résultat dans le domaine normal, l'inverse de l'opération mathématique effectuée par le second noeud pour produire la valeur.

**11.** Système de distribution de contenu selon la revendication 10, dans lequel la valeur est une clé.

**12.** Produit de type programme informatique conçu pour effectuer le procédé selon l'une des revendications 1 à 9.

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- CRC PRESS SERIES ON DISCRETE MATHEMATICES AND ITS APPLICATIONS. Handbook of Applied Cryptography. CRC Press, 01 October 1996

- **VANESA DAZA et al.** A Distributed and Computationally Secure Key Distribution Scheme. International Association for Cryptologic Research, 01 June 2002, 1-16